# EUROPÄISCHE PATENTSCHRIFT

(11) **EP 2 089 295 B1**
(45) Veröffentlichungstag und Bekanntmachung des Hinweises auf die Patenterteilung: **22.05.2013**
(21) Anmeldenummer: 07846732.1
(22) Anmeldetag: 22.11.2007
(51) Int. Cl.: B65G 1/137

(54) **SORTIER- UND VERTEILSYSTEM**
SORTING AND DISTRIBUTION SYSTEM
SYSTEME DE TRI ET DE DISTRIBUTION

(30) Priorität: 23.11.2006 DE 102006057266
(43) Veröffentlichungstag der Anmeldung: 19.08.2009
(73) Patentinhaber: SSI Schäfer Noell GmbH Lager-und Systemtechnik, 97232 Giebelstadt (DE)
(72) Erfinder: SCHÄFER, Gerhard, 57290 Neunkirchen (DE)
(74) Vertreter: Witte, Weller & Partner
(86) Internationale Anmeldenummer: PCT/EP2007/010116
(87) Internationale Veröffentlichungsnummer: WO 2008/061744

(56) Entgegenhaltungen:
- WO-A-96/36547
- US-A- 5 551 822
- US-A- 5 628 613

## Beschreibung

Die vorliegende Erfindung betrifft ein Sortier- und Verteilsystem zum Sortieren von Artikeleinheiten gemäß Kundenaufträgen mit hoher Sortierleistung, mit einer umlaufenden, vorzugsweise in sich geschlossenen, Sortierfördertethnik mit einem Fördermittel, wobei das Fördermittel mit einer Vielzahl von Aufnahmeeinrichtungen verbunden ist, an die Artikeleinheiten abzugeben sind, und mindestens einer Befüllstation zum manuellen Befüllen der Aufnahmeeinrichtungen mit Artikeleinheiten.

Ein derartiges System ist aus der WO 96/36547 A bekannt. Das Dokument US 5,551,822 A zeigt ein Kommissioniersystem mit einem Kassettenauswerfer. Das Dokument US 5,628,613 A offenbart eine Auswerteeinrichtung.

Unter einem Sortier- und Verteilsystem versteht man eine Technik zur Sortierung (oder Zuordnung) von Artikeleinheiten nach Kundenaufträgen in der zweiten Kommissionierstufe, vorrangig für Logistikzentren mit hoher Kommissionierleistung. Je nach verwendeter Technik und Artikelgröße werden Sortierleistungen von 2.000 bis 40.000 Stück/Stunde erreicht. Solche Sortier- und Verteilsysteme sind im Stand der Technik bekannt, insbesondere unter dem Begriff "Sorter". Voraussetzung für den Einsatz eines Sorters ist unter anderem die (automatische) Identifizierbarkeit der Einheiten, z. B. über Strichcodes oder Transponder (RFID) und die fördertechnische Eignung der Artikel.

Unter einer Artikeleinheit wird nachfolgend eine kleinste Verkaufseinheit bzw. eine kleinste Gebindegröße verstanden. Ein Artikel ist ein durch eine Nummer und Bezeichnung unterscheidbare (kleinste) Einheit eines Artikelsortiments. Oftmals werden Artikel auch als Ware oder Gut bezeichnet.

Unabhängig von ihrer Leistung werden Sorter vornehmlich nach ihrem Funktionsprinzip unterschieden. Es gibt unter anderem Dreharmsorter, Schuh- und Kammsorter, Kippschalensorter, Pop-up-Sorter, usw., um nur einige exemplarisch zu nennen.

Mit einem Sorter lassen sich verschiedene Artikel automatisiert verschiedenen Zielstellen zuführen. Dazu wird üblicherweise eine umlaufende Fördertechnik vorgesehen, die mit den Zielstellen in Verbindung steht. Unter einer Zielstelle wird ein Ort verstanden, an dem verschiedene Artikel gemäß einem Kundenauftrag zusammengeführt werden, um bspw. in einen Versandkarton gepackt zu werden. Um jeder Zielstelle den richtigen Artikel zuführen zu können, ist es jedoch erforderlich, zu wissen, wo sich welcher Artikel auf dem umlaufenden Förderer befindet.

Bei einem Kippschalensorter wird das Sortiergut durch Schrägstellung von Transportschalen über Schwerkraft in eine Zielrutsche befördert. Die Kippschalen sind auf gelenkig miteinander verbundenen Wagen montiert. Der Antrieb der Kippschalen erfolgt über ein umlaufendes Fördermittel (z.B. Kette) oder durch Antrieb von Wagen (z.B. über Linearmotoren). Durch Belegung mehrerer Schalen können auch Güter größerer Länge sortiert werden. Kippschalensorter ermöglichen die Sortierung eines breiten Artikelspektrums (z.B. auch Gepäck). Es werden Umlaufgeschwindigkeiten von etwa 2,5 m/s und Sortierleistungen bis etwa 15.000 Stück/Std. erreicht.

Eine Befüllung solcher Kippschalensorter erfolgt im Stand der Technik dann üblicherweise automatisiert. Der Sortierfördertechnik werden über eine separate Fördertechnik Artikel zugeführt, die an speziellen Einschleuspunkten von der separaten Fördertechnik an die Sortierfördertechnik abgegeben werden. Am Einschleuspunkt wird vorzugsweise automatisch, z.B. durch Lesen eines Strichcodes, erkannt, welcher Artikel(typ) an welche Schale abgegeben wird. Mit diesen Informationen kann eine übergeordnete Steuerung dann den Artikel an eine vorbestimmte Zielstelle leiten. Wie bereits oben erwähnt, lässt sich so eine Sortierleistung von ca. 15.000 Stück/Std. erzielen.

Es gibt jedoch Wirtschaftsbranchen, wie z.B. der Handel mit Modeschmuck, bei denen eine höhere Sortierleistung benötigt wird. Es sind Aufgabenstellungen bekannt, bei denen eine Sortierleistung von bis zu 60.000 Stück/Stunde benötigt wird. Dies kann ein vollautomatisierter Sorter nicht leisten.

Neben vollautomatisierten Sortern sind im Stand der Technik auch Sortier- und Verteilsysteme bekannt, bei denen die Sortierfördertechnik manuell bestückt wird. Dabei werden Artikel von Bedienpersonal an Einspeisepunkten manuell eingescannt und anschließend in z.B. Schalen der Sortierfördertechnik geworfen. Die Schalen selbst weisen in ihrem Boden Löcher auf, um von unterhalb der Schale im Weg einer Lichtintensitätsmessung festzustellen, ob ein Artikel in die Schale geworfen wurde oder nicht. Hat eine Bedienperson einen Artikel eingescannt und wurde gleichzeitig erkannt, dass dieser Artikel in eine bestimmte Schale geworfen wurde, so kann ein übergeordneter Lagerverwaltungsrechner (LVR) diesen Artikel einer Zielstelle zuführen.

Dabei kommt es jedoch häufig zu Fehlern. Zum einen ist nicht immer sichergestellt, dass der Einwurf eines Artikels in eine Schale auch tatsächlich erkannt wird. Das Erkennen eines eingeworfenen Artikels wird umso schwieriger, je kleiner die Gebindegröße ist. Dies ist insbesondere im Bereich der Modeschmuckindustrie kritisch, da dort die Artikel mitunter sehr klein sind.

Da die Schalen manuell bestückt werden, darf eine Geschwindigkeit, mit der die Schalen am Einschleuspunkt vorbeigeführt werden, nicht allzu groß sein, da die Zielperson ansonsten möglicherweise einen Artikel versehentlich in eine bereits gefüllte Schale wirft. In diesem Fall würde der LVR nicht erkennen, dass die Schale einen weiteren Artikel bzw. überhaupt einen Artikel enthält. Ferner wäre dieser "Fehler" nicht mehr korrigierbar, da die Sortierfördertechnik in der Regel nicht angehalten werden kann.

Alternativ zu den beiden vorgenannten Möglichkeiten, Artikel automatisiert zu kommissionieren, ist es bekannt, die Bedienpersonen mit einem Auftragsbehälter durch ein Lager laufen zu lassen (Prinzip "Mann zur Ware") um die einzelnen Artikeltypen eines Kundenauftrags manuell aus dem Lager zu holen. Auf diese Weise können jedoch nur sehr geringe Sortierleistungen erzielt werden. Eine Kommissionierung gemäß dem Prinzip "Mann zur Ware" ist bei einem großen Artikelspektrum bei hohen Kommissionieranforderungen (z.B. 50.000 Stück/Std.) nicht realisierbar, da zum einen sehr viel Platz zum Aufstellen des gesamten Artikelsortiments in einem begehbaren Lager benötigt wird und zum anderen sehr viele Bedienpersonen (1 Person/Auftrag) durch das Lager laufen müssen, die sich ggf. selbst im Wege stehen.

Es ist daher eine Aufgabe der vorliegenden Erfindung, ein Sortier- und Verteilsystem zu schaffen, das mit einer sehr hohen Kommissionierleistung bzw. Sortierleistung betrieben werden kann.

Diese Aufgabe wird erfindungsgemäß durch ein Sortier- und Verteilsystem der eingangs genannten Art zum Sortieren von Artikeleinheiten gemäß Kundenaufträgen mit hoher Sortierleistung gelöst, wobei das System ferner eine Vielzahl von Zielstellen aufweist, die jeweils an die Sortierfördertechnik gekoppelt sind und an die die Aufnahmeeinrichtungen Artikeleinheiten in Übereinstimmung mit einem Kundenauftrag abgeben können, wobei den Zielstellen Kundenaufträge zugewiesen sind; wobei die Befüllstation eine Vielzahl von Befüllschächten aufweist, von denen jeder an seinem unteren Ende einen Öffnungsmechanismus umfasst, um in den Befüllschacht kommissionierte Artikeleinheiten automatisiert an die sich, vorzugsweise konstant bzw. kontinuierlich, vorbeibewegenden Aufnahmeeinrichtungen abgeben zu können.

Die Befüllstation der vorliegenden Erfindung hat mehrere Vorteile. Eine Bedienperson muss einen Artikel nicht mehr direkt in eine Aufnahmeeinrichtung, wie z.B. eine Schale, werfen, sondern kann den Artikel zuvor in einen Befüllschacht geben. Sobald eine leere Schale unter dem Befüllschacht vorbeifährt, kann dieser geöffnet werden und den in ihm befindlichen Artikel freigeben. Somit muss nicht mehr die Bedienperson entscheiden, in welche Schale ein Artikel abgegeben wird. Dies wird von einer übergeordneten Steuerung (vorab) entschieden. Dies resultiert in einem erheblich geringeren Stress für die Bedienperson, da sie nicht dazu gezwungen ist, eine leere Schale in der Vielzahl von vorbeifahrenden Schalen zu finden, in die sie den Artikel geben kann. Ferner wird auf diese Weise die (nachträgliche) Erkennung, ob ein Artikel in die Schale gegeben wurde, überflüssig. Die übergeordnete Steuerung weiß, in welche Schale sie welchen Artikel geben kann und soll.

Die Sortierfördertechnik kann mit einer erheblich höheren Geschwindigkeit als im Stand der Technik betrieben werden. Die Bedienperson muss sich nur noch auf die "statischen" Befüllschächte und nicht mehr auf die mitunter vorbeirasenden Schalen konzentrieren. Es liegen Berichte vor, dass es Bedienpersonen bei hohen Geschwindigkeiten schlecht wird. Diese körperliche Beeinträchtigung ist mit der vorliegenden Erfindung ausgeschlossen.

Die Befüllung von freien Schalen erfolgt automatisiert, obwohl die Artikel zuvor manuell entnommen werden.

Vorzugsweise umfasst die Befüllstation eine Vielzahl von Befüllschächten. Dies ist insbesondere dann von Vorteil, wenn mehrere Kundenaufträge gruppiert werden, die ein und denselben Artikeltyp beinhalten (Batch-Bildung). In diesem Fall werden zu kommissionierende Artikel am Befüllpunkt bspw. kartonweise (sortenrein) bereitgestellt, um alle Kundenaufträge, die diesen speziellen Artikeltyp aufweisen, tatsächlich auch, mit diesem speziellen Artikeltyp zu bedienen.

Gemäß einer bevorzugten Ausführungsform ist das untere Ende des Befüllschachts so über den Aufnahmeeinrichtungen angeordnet, dass die Aufnahmeeinrichtung Artikeleinheiten im Vorbeifahren aufnehmen können, wenn der Öffnungsmechanismus betätigt wird.

Hier wird also die Gravitation zum Übergeben der Artikeleinheiten vom Befüllschacht an die Aufnahmeeinrichtung eingesetzt.

Von besonderem Vorteil ist es, wenn die Befüllschächte mit optischen Anzeigen versehen sind, um einer Bedienperson anzuzeigen, in welchen der Befüllschächte, vorzugsweise welche Artikeleinheiten, zu kommissionieren sind.

Dann muss die Bedienperson nicht darauf achten, welcher Befüllschacht bereits gefüllt ist bzw. welcher Befüllschacht leer ist und somit für eine Befüllung zur Verfügung steht. So kann eine Befüllung auch gezielt vorab geplant werden. Da die Bedienperson üblicherweise Artikeleinheiten eines gleichen Typs in die Befüllschächte gibt, weil gerade Kundenaufträge abgearbeitet werden, die genau diesen Artikeltypen benötigen (Batch), könnte eine übergeordnete Steuerung bereits vorab planen, welche Schalen der Sortierfördertechnik - im Sinne eines Musters - mit diesem Artikeltyp zu bestücken sind. Kundenaufträge könnten dann parallel abgearbeitet werden, wobei bspw. an einer weiteren, stromaufwärts gelegenen Befüllstation andere Artikeltypen in die Schalen gegeben werden. Hier ist es von Vorteil, wenn alle Artikel eines Kundenauftrags dann in benachbarten Schalen der Sortierfördertechnik gelagert sind, weil anschließend die Ausschleusung an die Zielstellen, die mit dem jeweiligen Kundenauftrag verknüpft sind, einfach erfolgen kann.

Vorzugsweise weist jeder Befüllschacht eine Erfassungseinheit, insbesondere eine Lichtschranke oder ein Lichtgitter, auf.

Mit Hilfe einer Erfassungseinheit, insbesondere im Befüllschacht bzw. im Bereich der Befüllöffnung, kann überprüft werden, ob bzw. wann ein Artikel in einen Befüllschacht abgegeben wird. Mitunter kann überprüft werden, ob ein bestimmter Artikel von der Bedienperson in den richtigen Befüllschacht gegeben wurde. Wurde ein Artikel bspw. in einen falschen Befüllschacht gegeben, so kann dies festgestellt werden und es besteht die Möglichkeit, den Artikel entweder wieder aus dem Befüllschacht herauszunehmen und in den richtigen Befüllschacht zu geben oder man veranlasst die übergeordnete Steuerung dazu, den "falsch befüllten" Befüllungsschacht einer anderen Schale - als ursprünglich geplant - zuzuordnen. Daraus resultiert, dass Fehleinwürfe nachträglich korrigiert werden können. Im Stand der Technik war dies nicht möglich, da ein falsch eingeworfener Artikel - aufgrund der Bewegung der Sortierfördertechnik - sofort von der Bedienperson wegtransportiert wurde, so dass diese keine Möglichkeit mehr zur Korrektur hatte.

Gemäß einer weiteren vorteilhaften Ausgestaltung ist ein Materialflussrechner vorgesehen, der Signale erzeugt und überträgt.

Der Materialflussrechner ist ein Beispiel für die bereits zuvor erwähnte übergeordnete Steuerung. Der Materialflussrechner ist im Vergleich zu einer Bedienperson viel (schneller) in der Lage, zu entscheiden, in welche Schale ein Artikel abzugeben ist. Der Materialflussrechner ist auch dazu in der Lage die Zuordnung zwischen Schale und Artikel kurzfristig zu ändern. Man denke hier an das oben erwähnte Beispiel einer Fehlbefüllung.

Ferner ist es bevorzugt, wenn zusätzlich eine Lagerbehälter-Fördertechnik vorgesehen ist, die jede Befüllstation an ein Behälterlager koppelt.

Mit der Lagerbehälter-Förderstrecke können Lagerbehälter aus dem Behälterlager ausgelagert werden und zur Befüllstation transportiert werden. Hier wird das Prinzip "Ware zum Mann" realisiert. Die Bedienperson entnimmt so viele Artikel, wie sie für die Kundenaufträge benötigt, die alle diesen spezifischen Artikeltyp aufweisen (Batch-Abarbeitung). Durch Batch-Bildung können mehr Auftragszeilen als im Stand der Technik abgearbeitet werden. Außerdem sind weniger Lagerbewegungen, d.h. Ein- bzw. Auslagerung von Lagerbehältern zum Zwecke einer Abarbeitung eines Kommissionierauftrags, vonnöten. Ein Lagerbehälter wird bspw. nur einmal pro Stunde aus dem Lager geholt und zu einer Befüllstation verbracht, wobei ihm bspw. 15 Artikel entnommen werden, anstatt ihn innerhalb einer Stunde 15mal zum Befüllpunkt zu fahren, wie es der Fall wäre, wenn keine Batches gebildet würden. Die Lagerbehälter-Fördertechnik wird sowohl zum Einlagern als auch zum Auslagern von Lagerbehältern benutzt.

Ferner ist es von Vorzug, wenn der Materialflussrechner angepasst ist, Lieferungen von vorbestimmten Lagerbehältern an vorbestimmte Befüllstationen zu vorgegebenen Zeiten oder in einer gegebenen Reihenfolge zu veranlassen.

Der Materialflussrechner ist dafür verantwortlich, dass der richtige Lagerbehälter zum richtigen Zeitpunkt bei der richtigen Befüllstation zur Verfügung steht. Ferner ist er dafür verantwortlich, dass die Lagerbehälter in der richtigen Reihenfolge an die Befüllstation geliefert werden. Dies ermöglicht es, die Kommissionierleistung zu erhöhen.

Bei einer weiteren vorteilhaften Ausgestaltung ist bei jeder Befüllstation eine Anzeigerichtung vorgesehen, um eine Anzahl von aus Lagerbehältern zu entnehmenden Artikeleinheiten anzuzeigen.

So weiß die Bedienperson sofort, wie viele Artikel aus dem Lagerbehälter zu entnehmen sind. Im günstigsten Fall entnimmt sie sofort die richtige Anzahl von Artikeln, wobei vorausgesetzt ist, dass die Lagerbehälter sortenreine Artikel beinhalten, und gibt diese dann in die Befüllschächte, was vorzugsweise durch Leuchtanzeigen an den Befüllschächten angezeigt wird. Insbesondere ist ein Bestätigungsschalter vorgesehen, der betätigt wird, wenn die erforderliche Anzahl von Artikeln entnommen wurde. Dann kann der nächste Lagerbehälter angeliefert werden und der abgearbeitete Lagerbehälter kann in das Lager zurückgebracht werden. Dies ist auch möglich, wenn die Bedienperson die Artikel noch nicht alle auf die Befüllschächte verteilt hat, d.h. noch einige Artikel in der Hand hält und dies noch verteilt. In diesem Fall kann eine weitere Bestätigungstaste vorgesehen werden, mit der der übergeordneten Steuerung angezeigt werden kann, wann alle Artikel des bereits abtransportierten Lagerbehälters in die Befüllschächte gegeben wurden. Dann "weiß" die übergeordnete Steuerung, dass nunmehr der nächste Artikeltyp zur Verteilung auf die Befüllschächte ansteht, bzw. welcher Artikel mit welcher Schale "verheiratet" wird.

Deshalb ist es von Vorteil, wenn jede Befüllstation zumindest eine Bestätigungseinheit umfasst, um dem Materialflussrechner z.B. anzuzeigen, dass eine Artikelentnahme aus dem Lagerbehälter abgeschlossen ist.

Außerdem ist es bevorzugt, wenn die Befüllschächte in ein Gehäuse integriert sind.

Auf diese Weise wird verhindert, dass es der Bedienperson schlecht wird. Im Stand der Technik "rasen" die Schalen an der Bedienperson vorbei. Gleichzeitig muss die Bedienperson jedoch (mit ihren Augen) herausfinden, welche der Schalen noch leer ist, um den gerade abzuarbeitenden Artikel in eine Schale zu geben. Da der Gleichgewichtssinn des Menschen unter anderem stark von den optischen Eindrücken abhängt, ist ein statisches Bild von Vorteil. Durch das Gehäuse ist die Sicht auf die sich vorbeibewegende Sortierfördertechnik blockiert. Die Bedienperson sieht nur die "statisch" angeordneten Befüllschächte. Dies wirkt sich beruhigend auf die Bedienperson aus. Daraus resultiert, dass die Bedienperson weniger unter Stress steht und deshalb weniger Fehler macht. Außerdem kann die Bedienperson länger ohne Ermüdungserscheinungen am Befüllpunkt arbeiten.

Bei einer weiteren vorteilhaften Ausgestaltung sind die Aufnahmeeinrichtungen an die Abmessungen der Artikeleinheiten angepasst.

Sind die in die Schalen der Sortierfördertechnik abzugebenden Artikel sehr klein, wie es z.B. im Bereich des Modeschmuckhandels üblich ist, können auch die Aufnahmeschalen dementsprechend kleiner gemacht werden. Da die Artikel automatisiert in die Schalen abgegeben werden - und nicht mehr von der Bedienperson eingeworfen werden müssen - ist es nicht mehr erforderlich, relativ große Schalen vorzusehen, um die Trefferfläche ausreichend groß zu gestalten. Ein "Danebenwerfen" ist ausgeschlossen. Deshalb können in Anlagen, in denen bspw. Kleinteile kommissioniert werden, zwei Schalenreihen durch eine Vielzahl von kleineren Schalenreihen ersetzt werden, wodurch sich wiederum die Kommissionierleistung und auch die Sortierleistung erhöhen lässt.

Vorzugsweise sind die Aufnahmeeinrichtungen Schalen, die insbesondere in Längsrichtung der Fördermittel in zwei nebeneinander liegenden Reihen auf den Fördermitteln angeordnet sind.

Auch ist es von Vorteil, wenn die Fördermittel permanent mit einer Geschwindigkeit von mehr als 1 m/s betrieben werden.

Es sind sogar Geschwindigkeiten möglich, die größer oder gleich solchen Geschwindigkeiten sind, wie sie in der eingangs beschriebenen vollautomatisierten Sortiertechnik eingesetzt werden. Dies liegt daran, dass der Abwurf in die Schale bspw. von einem Mikroprozessor (SPS) - und nicht mehr von einem Mensch - gesteuert wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: stellt eine isometrische Ansicht auf eine Befüllstation gemäß der vorliegenden Erfindung.
- Fig. 2: zeigt eine isometrische Ansicht auf eine Gruppe von Befüllstationen in einem Sortier- und Verteilsystem gemäß der vorliegenden Erfindung.
- Fig. 3: zeigt eine isometrische Ansicht auf einen Teil einer Kommissionieranlage gemäß der vorliegenden Erfindung, wie sie in Fig. 4 genauer erläutert wird.
- Fig. 4: zeigt ein Blockdiagramm einer erfindungsgemäßen Kommissionieranlage.

In der nachfolgenden Beschreibung werden gleiche Elemente mit gleichen Bezugsziffern bezeichnet. Eine Befüllstation ist mit der Bezugsziffer 10 bezeichnet.

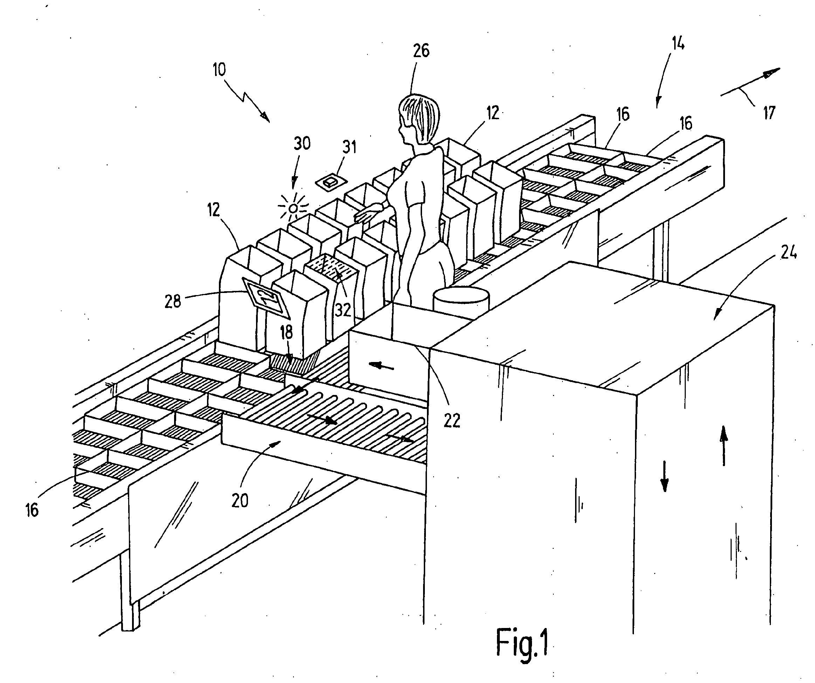

Fig. 1 zeigt eine perspektivische Ansicht einer Befüllstation 10.

Die Befüllstation 10 umfasst mindestens einen Befüllschacht 12. In Fig. 1 sind sechzehn Befüllschächte 12 gezeigt, die in zwei Reihen zu jeweils acht Befüllschächten angeordnet sind. Die Befüllschächte sind über einer Sortierfördertechnik 14 angeordnet. Die Sortierfördertechnik 14 kann bspw. ein Kippschalen-Sorter mit zwei Reihen von Schalen 16 sein. Es können jedoch auch andere Typen von Aufnahmeeinrichtungen verwendet werden, wie sie exemplarisch im Zusammenhang mit den verschiedenen Sortertypen im einleitenden Teil des hier vorliegenden Textes beschrieben wurden. Die in zwei Reihen angeordneten Schalen 16 werden in Richtung eines Pfeils 17 unter den Befüllschächten 12 hinwegbewegt.

Die zwei Reihen von Befüllschächten 12 sind vorzugsweise so angeordnet, dass sie direkt über den zwei Reihen von Schalen 16 stehen. Es versteht sich, dass mehrere Reihen von Schalen 16 eingesetzt werden können. Die Größe der Schalen 16 hängt insbesondere von der Größe der zu kommissionierenden Artikel ab. Wird die Anzahl der Reihen von Schalen verändert, so empfiehlt es sich auch die Anzahl von Reihen von Befüllschächten 12 entsprechend zu ändern.

Eine Querschnittsfläche der Schächte 12 ist vorzugsweise an eine Aufnahmefläche der Schalen 16 angepasst. Im Idealfall sind beide Flächen annähernd gleich groß.

Am unteren Ende der Befüllschächte 12 ist ein Öffnungsmechanismus 18 vorgesehen, mit dem der Befüllschacht 12 nach unten, d.h. in Richtung der Schalen 16, geöffnet werden kann. Exemplarisch sei hier ein seitlich wegklappbarer Boden genannt. Es können jedoch auch andere Mechanismen verwendet werden, wie z.B. Irisblenden oder Ähnliches.

Ferner umfasst die Befüllstation 10 eine weitere Fördertechnik 20, um Lagerbehälter 22 von der und zu der Befüllstation 10 transportieren zu können. In der Fig. 1 ist eine Lagerbehälter-Förderstrecke 20 in Form einer Rollenbahn dargestellt. Es versteht sich, dass auch andere Typen von Förderstrecken eingesetzt werden können, wie z.B. Gurtbänder oder Ähnliches.

Mit Hilfe der Rollenbahnen 20 werden Lagerbehälter 22 aus einem hier nicht dargestellten Behälterlager über bspw. einen Lift 24 zur Befüllstation 10, vorzugsweise in Armreichweite einer Bedienperson 26, transportiert. Ein Transportweg der Behälter ist in der Fig. 1 exemplarisch durch schwarze Pfeile verdeutlicht. In dem Beispiel der Fig. 1 befindet sich das (nicht dargestellte) Behälterlager unterhalb der Befüllstation 10, weshalb der Lift 24 eingesetzt wird, um Lagerbehälter 22 zuzuführen.

Sobald der Lagerbehälter 22 an der Befüllstation 10 angekommen ist, bekommt die Bedienperson 26 über ein Display 28 angezeigt, wie viele Artikeleinheiten dem momentan angelieferten Lagerbehälter 22 zu entnehmen sind. In der beispielhaften Situation der Fig. 1 sind zwölf Artikeleinheiten zu entnehmen. Die Bedienperson 26 entnimmt dann die entsprechende Anzahl von Artikeleinheiten 26 aus dem Lagerbehälter 22 und gibt sie von oben in Öffnungen der Befüllschächte 12. Leere Befüllschächte 12 können mittels einer z.B. grünen Leuchte angezeigt werden. In der Fig. 1 ist exemplarisch ein Anzeigeelement 30 dargestellt. Es versteht sich, dass jedem Befüllschacht 12 mindestens eine Leuchte 30 zugeordnet sein kann. Jedem Schacht 12 könnte z.B. eine grüne und eine rote Leuchte zugeordnet sein, wobei die Farbe Grün signalisiert, dass Artikel in diesen Befüllschacht 12 gegeben werden können, und wobei Rot signalisiert, dass in diesen Befüllschacht 12 keine Artikel gegeben werden dürfen.

Wenn die Bedienperson 26 die zwölf Artikel aus dem Lagerbehälter 22 entnommen hat, kann sie dies durch Betätigen einer Quittiertaste 31 an eine hier nicht dargestellte übergeordnete Steuerung mitteilen. Die Quittiertaste 31 ist hier exemplarisch oberhalb der beiden Reihen aus Befüllschächten 12 angeordnet. Es versteht sich, dass die Quittierungstaste 31 bspw. auch als Fußtaste ausgebildet sein könnte, auf die die Bedienperson 26 im Falle einer Quittierung tritt.

Ferner ist es möglich, dass die Quittiertaste 31 ein erstes Mal betätigt wird, wenn alle zu entnehmenden Artikel aus dem Lagerbehälter 22 herausgenommen wurden, so dass der Abtransport dieses Lagerbehälters 22 initiiert und ein Antransport eines neuen Lagerbehälters 22 veranlasst werden kann. In der Zwischenzeit kann die Bedienperson 26 die restlichen Artikel in leere Befüllschächte 12 geben. Im Idealfall steht der nächste Lagerbehälter 22, der dann einen anderen Artikeltyp beinhaltet, der zur Abarbeitung eines Kundenauftrags erforderlich ist, bereits bereit.

Der Abwurf der Artikel selbst in die Befüllschächte 12 kann mittels eines Lichtgitters überwacht werden. Es versteht sich, dass auch andere Erfassungsmittel eingesetzt werden können, wie z.B. eine einfache Lichtschranke, um das Ereignis eines Einwurfes zu detektieren.

Mittels des Lichtgitters 32 lässt sich überprüfen, ob die Bedienperson 26 den Artikel auch tatsächlich in einen freien bzw. dafür vorgesehenen Befüllschacht 12 gegeben hat. Wirft sie den Artikel z.B. versehentlich in einem bereits belegten Befüllschacht 12, der z.B. rot beleuchtet ist, so könnte mittels eines Aufblinkens der roten Leuchte angezeigt werden, dass eine Fehlkommissionierung stattgefunden hat. Der Kommissionierer 26 hätte somit die Möglichkeit, in den Befüllschacht 12 zu greifen und den falsch eingeworfenen Artikel in einen freien (grünen) Befüllschacht 12 zu geben. Das Signal des Lichtgitters 32 kann dann ferner dazu herangezogen werden, um ein Öffnen des Bodens des Befüllschachts 12 zu verhindern. Solange die Bedienperson 26 ihre Hand in dem Befüllschacht 12 hat, wird dies durch das Lichtgitter 32 detektiert. Ein entsprechendes Signal wird an die übergeordnete Steuerung geliefert, die dann ein Öffnen dieses Befüllschachts 12 verhindert. In einem solchen Falle könnte die Korrektur des Fehlers exemplarisch durch Betätigen der Quittiertaste 31 bestätigt werden, so dass die übergeordnete Steuerung weiß, dass nunmehr mit dem normalen Ablauf fortgefahren werden kann.

Sobald die Bedienperson 26 alle Artikel des ersten Lagerbehälters 22 in die Befüllschächte 12 gegeben hat, kann sie dies der übergeordneten Steuerung durch erneutes Betätigen der Quittiertaste 31 anzeigen. Optional können weitere Quittiertasten vorgesehen sein, die jedoch in der Fig. 1 nicht dargestellt sind. So könnte z.B. eine Quittiertaste zum An- und Abtransport von Lagerbehältern 22, eine Quittiertaste zur Bestätigung der Behebung eines Fehlers sowie eine Quittiertaste zur Bestätigung des Einwurfes aller Artikel vorgesehen werden.

Feldversuche haben ergeben, dass es für die Bedienperson 26 sehr viel angenehmer ist, Artikel in die statischen Befüllschächte 12 zu geben, als sie in die vorbeirasenden Schalen 16 werfen zu müssen. Die Schalen 16 werden mit Geschwindigkeiten gefahren, die gleich oder größer als Geschwindigkeiten in vollautomatisierten Anlagen sind. Typische Geschwindigkeiten bei herkömmlichen vollautomatisierten Sortern liegen bei ca. 2,5 m/s.

Die Befüllstation 10 der Fig. 1 zeichnet sich ferner ergonomisch aus. Die Befüllschächte 12 sowie der Anlieferungsort der Lagerbehälter 22 liegen alle vorzugsweise innerhalb der Armreichweite der Bedienperson 26, so dass diese nahezu nicht laufen muss, um Artikel in die Befüllschächte 12 zu geben. Die Person 26 kann sowohl im Stehen als auch im Sitzen arbeiten.

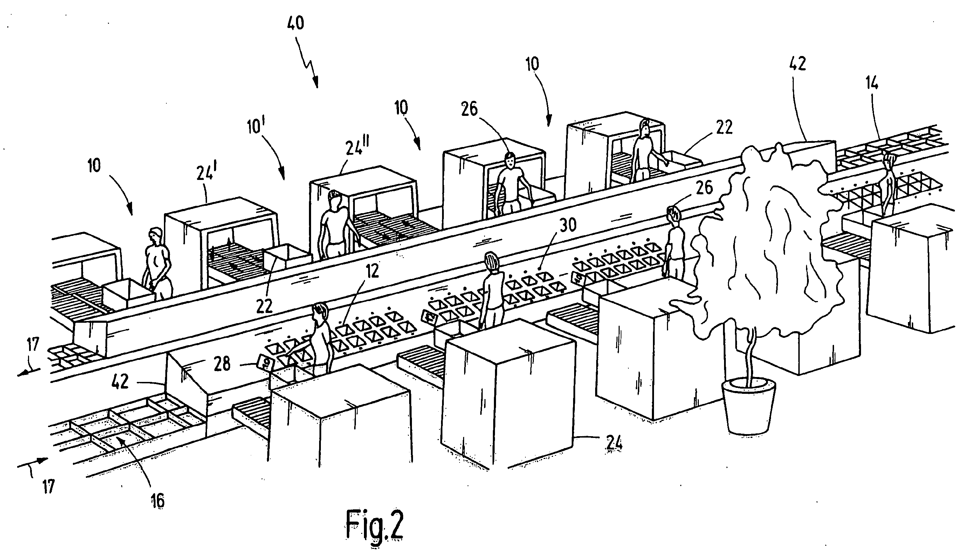

Bezug nehmend auf Fig. 2 ist eine Gruppe 40 von Befüllstationen 10 dargestellt.

Die Sortierfördertechnik 14 kann in Form einer endlos umlaufenden Fördertechnikschleife realisiert sein, so dass die Fächer 16 zuerst an den in der Fig. 2 vorne dargestellten Befüllplätzen 10 vorbeiläuft, um anschließend an den im hinteren Bereich der Fig. 2 dargestellten Befüllplätzen 10 vorbeizufahren.

Aus der Anordnung der Fig. 2 ergibt sich, dass Kundenaufträge parallel abgearbeitet werden können. Während eine erste Bedienperson 26 in einer ersten Befüllstation 10 Artikel eines ersten Typs in die Schächte 12 gibt, kann eine zweite Bedienperson 26 bei einer zweiten Befüllstation 10 Artikel eines zweiten Typs in die Schächte 12 geben. Ähnliches gilt für die dritte und jede weitere Befüllstation. Auf diese Weise können viele verschiedene Artikeltypen, die jedoch zu ein und demselben Kundenauftrag gehören, gleichzeitig in Befüllschächte 12 und an die Sortierfördertechnik 14 abgegeben werden.

Vorzugsweise wird jedem Kundenauftrag eine Gruppe von (insbesondere zusammenhängenden) Schalen 16 zugeordnet. Sobald diese Gruppe von Schalen 16 die erste Befüllstation 10 passiert, öffnen sich die in Fig. 1 dargestellten Böden 18 und geben den bzw. die im Befüllschacht 12 gespeicherten Artikel frei. Da sich die Fördertechnik 14 ständig bewegt, gelangt die Gruppe von Schalen 16 nahezu unverzüglich zur zweiten Befüllstation 10, wo Artikel eines anderen Typs in die gleiche Schale 16 oder eine andere Schale 16 abgegeben werden können. Gleiches gilt für jede weitere stromaufwärts hinsichtlich der Transportrichtung der Fördertechnik 14 gelegene Befüllstation 10.

In der Fig. 2 ist nunmehr auch ein Gehäuse 42 gezeigt, in das die Befüllschächte 12 integriert sein können. Das Gehäuse 42 hat die Funktion, die vorbeifahrenden Schalen 16 aus dem Sichtfeld der Bedienperson 26 herauszuhalten. Die Bedienperson 26 sieht lediglich die "statischen" Befüllschächte 12 und nicht die mitunter vorbeirasenden Schalen 16. Die Bedienperson 26 kann somit vollkommen entspannt arbeiten. Dies liegt auch daran, dass die Bedienperson 26 keine freien Schalen aussuchen muss, in die sie die Artikel werfen kann. Dies wird durch die übergeordnete Steuerung geregelt. Die Steuerung entscheidet, wann welcher Schacht 12 geöffnet werden muss.

Ein im Stand der Technik übliches Rochieren der Bedienpersonen 26 ist ebenfalls nicht mehr erforderlich. Im Stand der Technik haben die Bedienpersonen 26 rochiert, weil die am weitesten stromabwärts arbeitende Bedienperson 26 am wenigstens freie Schalen 16 zur Verfügung hatte, um noch Artikel einwerfen zu können, da die stromaufwärts arbeitenden Bedienpersonen 26 möglicherweise bereits nahezu alle freien Schalen 16 mit Artikeln belegt hatten.

In der oberen Reihe von Befüllstation 10 der Fig. 2 ist ferner eine besondere Befüllstation 10' gezeigt. Es handelt sich dabei um die zweite Bedienperson 26 von links. Die Befüllstation 10' zeichnet sich dadurch aus, dass zwei Lifte 24'und Lift 24" für den Nachschub von Lagerbehältern 22 sorgen. Im Beispiel der Fig. 2 ist die Situation dargestellt, bei der der rechte Lift 24" gerade einen neuen Lagerbehälter antransportiert, während der linke Lift 24 einen Lagerbehälter 22 zur Entnahme bereitstellt. Die Bereitstellungszeiten für Lagerbehälter 22 lassen sich so erheblich reduzieren.

Alternativ können zwei Lifte 24 von nur einer Bedienperson 26 bedient werden. Dies ist insbesondere dann von Vorteil, wenn eine der Bedienpersonen 26 eine Ruhepause braucht. Die Artikel, die über den ihr zugeordneten Lift 24 angeliefert werden, können dann von einer benachbarten Bedienperson 26 (kurzfristig) mit in die Schächte 12 gefüllt werden, so dass ein Kundenauftrag trotz Pause abgearbeitet werden kann. Dies erhöht die Flexibilität des Gesamtsystems.

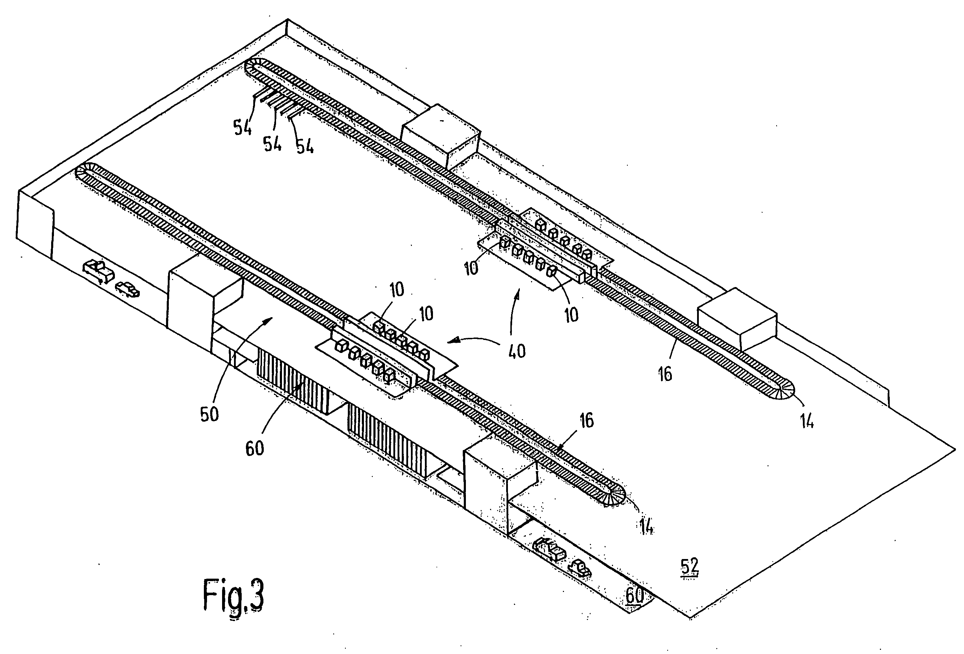

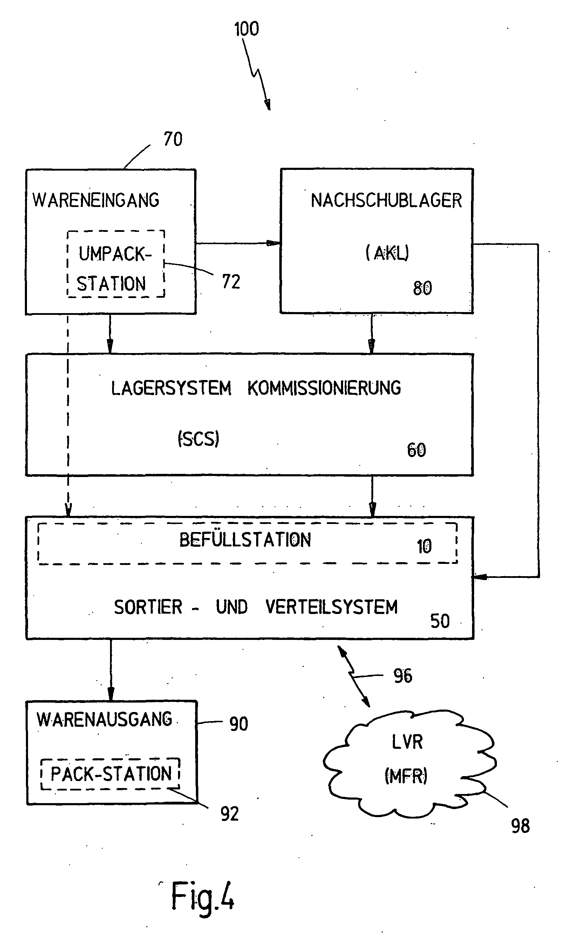

Bezug nehmend auf Fig. 3 ist eine perspektivische Ansicht auf einen Teil einer Kommissionieranlage gezeigt, wie sie noch ausführlicher im Zusammenhang mit der Fig. 4 beschrieben werden wird.

Ähnlich zur Fig. 2 sind hier Gruppen 40 von Befüllstationen 10 gezeigt. Ferner ist jeweils eine Sortierfördertechnik 14 in umlaufender und in sich geschlossener Form mit einer Vielzahl von Fächern 16 gezeigt. Diese beiden Gruppen 40 mit ihren jeweiligen Sortierfördertechniken 14 bilden ein exemplarisches Sortier- und Verteilsystem 50 gemäß der vorliegenden Erfindung. Das Sortier- und Verteilsystem 50 ist hier in einem ersten Obergeschoss 52 eines Gebäudes dargestellt. Es versteht sich, dass ein System 50 mit mehr oder weniger Sortierfördertechniken 14 und Befüllstationen 10 realisiert werden kann. Ein System 50 umfasst mindestens eine Sortierfördertechnik 14 sowie eine Befüllstation 10 mit mindestens einem Befüllschacht 12. Das System 50 ist skalierbar, d.h. es können jederzeit weitere Befüllstationen 10 bzw. Befüllschächte 12 hinzugefügt werden. Die Sortierfördertechnik 14 kann beliebig erweitert werden, insbesondere wenn zusätzliche Zielstellen 54 benötigt werden, von denen in der Fig. 3 insgesamt 5 Stück exemplarisch dargestellt sind.

Das in Fig. 3 gezeigte Sortier- und Verteilsystem 50 weist pro Sortierfördertechnikschleife 14 z.B. 500 Zielstellen 54 auf. Dies bedeutet, dass 500 Kundenaufträge gleichzeitig pro Schleife abgearbeitet werden können.

Ein Lagersystem 60 für die Kommissionierung ist hier exemplarisch in einem Erdgeschoss 60 angeordnet. Das Lagersystem 60 ist dabei vorzugsweise direkt unterhalb der Gruppen 40 angeordnet, um die Wege von Behältern aus dem Lager 60 zu den Befüllstationen 10 so kurz wie möglich zu halten. In den Lagern 60 können sog. Lagerkarusselle zur Lagerung von Lagerbehältern verwendet werden. Der Transport zwischen Lager 60 und Befüllstationen 10 erfolgt vorzugsweise über eine geeignete Fördertechnik, die in der Fig. 3 nicht dargestellt ist.

Bezug nehmend auf Fig. 4 ist ein Blockdiagramm einer Kommissionieranlage 100 gemäß der vorliegenden Erfindung gezeigt.

Die Kommissionieranlage umfasst insbesondere einen Wareneingang 70 mit ggf. Umpackstationen 72, ein Nachschublager 80, ein Lagersystem für die Kommissionierung 60, ein Sortier- und Verteilsystem 50 mit Befüllstationen 10 sowie einen Warenausgang 90 vorzugsweise mit Packstationen 92. Die Bewegung der Artikel wird mit einem Lagerverwaltungsrechner (LVR) bzw. einem Materialflussrechner (MFR) 98 gesteuert und geregelt.

Bei dem Nachschublager 80 kann es sich um ein sog. automatisiertes Kleinteilelager (AKL) handeln, in welchem die Lagerbehälter 22 bspw. doppelt tief gelagert werden. Erfolgt die Anlieferung von Artikeln in den Wareneingang 70 bspw. auf Paletten, so könnten diese bei Umpackstationen 72 von der Palette in Lagerbehälter umgepackt werden. Es versteht sich, dass zwischen den einzelnen Blöcken der Fig. 4 geeignete Fördertechniken vorgesehen sind, um den Material- bzw. Artikelfluss gewährleisten zu können.

Wie bereits im Zusammenhang mit der Fig. 3 erwähnt, kann zwischen dem Nachschublager 80 und dem Sortier- und Verteilsystem 50 ein Lagersystem 60 für die Kommissionierung vorgesehen sein, vorzugsweise in Form eines Karusselllagers. Das Karusselllager liefert die erforderliche Leistung, um eine Vielzahl von Befüllstationen 10 mit Lagerbehältern 22 zu versorgen. Gemäß der vorliegenden Erfindung kann das Nachschublager 80 z.B. mit 10 Gassen ausgestattet sein, so dass ca. 160.000 Stellplätze (in doppeltiefer Ausführung) zur Verfügung stehen. Diese 10 Gassen werden mit 10 (nicht dargestellten) Regalbediengeräten bedient. Das Karusselllager 60 umfasst ca. 30.000 Behälterplätze. Die Leistung des Karusselllagers liegt bei ca. 6.000 Behältern pro Stunde, die ein- und ausgelagert werden können. Die Sortierfördertechnik 14 ermöglicht es, ca. 29.000 Schalen pro Stunde an den Befüllstationen 10 vorbeizuführen. Dies bedeutet, wenn man drei - anstatt zwei, wie in Fig. 3 gezeigt - Sortierfördertechniken 14 vorsieht, kommt man auf eine Gesamtleistung von ca. 87.000 Schalen, die pro Stunde gefüllt werden können. Dies stellt eine enorme Leistung dar, die mit keinem Sortier- und Verteilsystem gemäß dem Stand der Technik erzielt werden kann.

## Patentansprüche

1. Sortier- und Verteilsystem (50) zum Sortieren von Artikeleinheiten gemäß Kundenaufträgen mit hoher Sortierleistung, mit:
einer umlaufenden, vorzugsweise in sich geschlossenen, Sortierfördertechnik (14) mit einem Fördermittel, wobei das Fördermittel mit einer Vielzahl von Aufnahmeeinrichtungen (16) verbunden ist, an die Artikeleinheiten abzugeben sind; und
mindestens einer Befüllstation (10; 10') zum manuellen Befüllen der Aufnahmeeinrichtungen (16) mit Artikeleinheiten; **gekennzeichnet durch**
eine Vielzahl von Zielstellen (54), die jeweils an die Sortierfördertechnik (14) gekoppelt sind und an die die Aufnahmeeinrichtungen (16) Artikeleinheiten in Übereinstimmung mit einem Kundenauftrag abgeben können, wobei den Zielstellen (54) Kundenaufträge zugewiesen sind, wobei die Befüllstation (10; 10') eine Vielzahl von Befüllschächten (12) aufweist, von denen jeder an seinem unteren Ende einen Öffnungsmechanismus (18) umfasst, um in den Befüllschacht (12) kommissionierte Artikeleinheiten automatisiert an die sich, vorzugsweise konstant, vorbeibewegenden Aufnahmeeinrichtungen (16) abgeben zu können.

2. System nach Anspruch 2, wobei das untere Ende des Befüllschachts (12) so über den Aufnahmeeinrichtungen (16) angeordnet ist, um die Artikeleinheiten im Vorbeifahren aufnehmen zu können, wenn der Öffnungsmechanismus (18) betätigt wird.

3. System nach Anspruch 1 oder 2, wobei die Befüllschächte (12) mit optischen Anzeigen (30) versehen sind, um einer Bedienperson (26) anzuzeigen, in welchen der Befüllschächte (12), vorzugsweise welche, Artikeleinheiten zu kommissionieren sind.

4. System nach einem der vorhergehenden Ansprüche, wobei jeder Befüllschacht (12) eine Erfassungseinheit (32), insbesondere eine Lichtschranke oder ein Lichtgitter, aufweist, um eine Kommissionierung einer Artikeleinheit in den Befüllschacht (12) zu erfassen.

5. System nach einem der vorhergehenden Ansprüche, wobei ein Materialflussrechner (98) vorgesehen ist, der Signale erzeugt und überträgt, um in Befüllschächte (12) kommissionierte Artikeleinheiten in freie Aufnahmeeinrichtungen (16) abzugeben und um die Artikeleinheiten in den Aufnahmeeinrichtungen (16) anschließend an vorbestimmte Zielstellen (54) zu leiten.

6. System nach einem der vorhergehenden Ansprüche, wobei ferner eine Lagerbehälter-Fördertechnik (20) vorgesehen ist, die jede Befüllstation (10; 10') an ein Behälterlager (60; 80) koppelt, um Lagerbehälter (22) mit vorbestimmten Artikeleinheiten an die Befüllstation (10; 10') zu liefern und gegebenenfalls Lagerbehälter (22), nach erfolgter Entnahme und Kommissionierung in die Befüllschächte (12), wieder in das Behälterlager (60; 80) einzulagern.

7. System nach Anspruch 5 und 6, wobei der Materialflussrechner (98) angepasst ist, Lieferungen von vorbestimmten Lagerbehältern (22) an vorbestimmte Befüllstationen (10; 10') zu gegebenen Zeiten oder in einer gegebenen Reihenfolge zu veranlassen.

8. System nach den Ansprüchen 5 bis 7, wobei jede Befüllstation (10; 10') eine Bestätigungseinheit (31) umfasst, um dem Materialflussrechner (98) anzeigen zu können, dass eine Artikelentnahme aus einem Lagerbehälter (22) abgeschlossen ist.

9. System nach einem der Ansprüche 5 bis 8, wobei bei jeder Befüllstation (10; 10') eine Anzeigevorrichtung (28) zugeordnet ist, um eine Anzahl von aus Lagerbehältern (22) zu entnehmenden Artikeleinheiten anzuzeigen.

10. System nach einem der vorhergehenden Ansprüche, wobei die Befüllschächte (12) in ein Gehäuse (42) integriert sind, um zu verhindern, dass Bedienpersonen (26) die sich unter den Befüllschächten (12) hinwegbewegenden Aufnahmeeinrichtungen (16) sehen können.

11. System nach einem der vorhergehenden Ansprüche, wobei die Aufnahmeeinrichtungen (16) so bemessen sind, dass Kleinteile aufgenommen werden können.

12. System nach einem der vorhergehenden Ansprüche, wobei die Aufnahmeeinrichtungen (16) Schalen sind, die vorzugsweise in Längsrichtung der Fördermittel in zwei nebeneinander liegenden Reihen auf den Fördermitteln angeordnet sind.

13. System nach einem der vorhergehenden Ansprüche, wobei die Fördermittel permanent mit einer Geschwindigkeit von mehr als 1 m/s betrieben werden.

14. Kommissionieranlage (100) mit einem Sortier- und Verteilsystem (50) nach einem der Ansprüche 1 bis 13, einem Wareneingang (70), einem Nachschublager (80), vorzugsweise einem Lagersystem (60) für das Sortier- und Verteilsystem (50), und einem Warenausgang (90).

## Claims

1. A sorting and distributing system (50) for sorting article units in accordance with customers' orders, the system having a high sorting performance and comprising:
a rotary sorting conveyor (14), which is preferably closed, having a conveying means, wherein the conveying means is connected to a plurality of receiving devices (16) to which the article units are to be delivered;
at least one filling station (10; 10') for manually filling article units into the receiving devices (16), **characterized by**
a plurality of destination positions (54) each of which is coupled to the sorting conveyor (14) and to which the receiving devices (16) can deliver article units in accordance with a customer's order, wherein the destination positions (54) are assigned to customers' orders,
wherein the filling station (10; 10') comprises a plurality of filling buckets (12), each of which comprises an opening mechanism (18) at a lower end thereof, in order to deliver article units, which were picked into the filling bucket (12), to the, preferably constant, passing-by receiving devices (16) in an automated manner.

2. The system of claim 2, wherein the lower end of the filling bucket (12) is arranged above the receiving devices (16) for allowing receiving the article units while they are passing, if the opening mechanism (18) is actuated.

3. The system of claim 1 or 2, wherein the filling bucket (12) is provided with an optical display (30) for indicating, to an operator (26), into which of the filling buckets (12), preferably which, article unit is to be picked.

4. The system of any of the preceding claims, wherein each of the filling buckets (12) comprises a detection unit (32), particularly a light barrier or a light grid, for detecting a picking process of one article unit into the filling bucket (12).

5. The system of any of the preceding claims, wherein a material flow computer (98) is provided for generating and transmitting signals, in order to deliver article units, which were order-picked into the filling buckets (12), to free receiving devices (16) and then to guide the article units within the receiving devices (16) to predetermined destination positions (54).

6. The system of any of the preceding claims, wherein further a storage-container conveyor (20) is provided for coupling each of the filling stations (10; 10') to a container warehouse (60; 80), in order to supply storage containers (22) containing predetermined article units to the filling station (10; 10'), and, if necessary, store same back into the container warehouse (60; 80) after removal and pick into the filling buckets (12).

7. The system of claims 5 and 6, wherein the material flow computer (98) is adapted to cause deliveries of predetermined storage containers (22) to predetermined filling stations (10; 10') at given times, or in a given sequence.

8. The system of the claims 5 to 7, wherein each of the filling stations (10; 10') comprises a confirmation button (31) allowing signalling to a material flow computer (98) that an article removal from a storage container (22) is completed.

9. The system of any of the claims 5 to 8, wherein each of the filling stations (10; 10') is assigned to a display device (28), in order to indicate a number of article units which are to be retrieved from the storage containers (22).

10. The system of any of the preceding claims, wherein the filling buckets (12) are integrated into a housing (42), in order to avoid that operators (26) can see the receiving devices (16) which are moving beneath the filling buckets (12).

11. The system of any of the preceding claims, wherein the receiving devices (16) are dimensioned such that small parts can be received.

12. The system of any of the preceding claims, wherein the receiving devices (16) are trays, which are preferably arranged in a longitudinal direction of the conveying means in two oppositely arranged rows on the conveying means.

13. The system of any of the preceding claims, wherein the conveying means is operated permanently at a speed of more than 1 m/s.

14. An order-picking system (100) having a sorting and distributing system (50) in accordance with one of the claims 1 to 13, a goods receipt (70), a supply warehouse (80), preferably one warehouse system (60) dedicated to the sorting and distributing system (50), and a goods issue (90).

## Revendications

1. Système de tri et de distribution (50) pour le tri d'unités d'articles selon des commandes de clients avec une haute capacité de tri, avec:
- une installation tournante, de préférence fermée sur elle-même, de transport de tri (14) avec un moyen de transport, dans lequel le moyen de transport est relié à une multiplicité de dispositifs de réception (16), auxquels il faut fournir des unités d'articles; et
- au moins une station de remplissage (10; 10') pour le remplissage manuel des dispositifs de réception (16) avec des unités d'articles;
**caractérisé par**
- une multiplicité de postes cibles (54), qui sont respectivement couplés à l'installation de transport de tri (14) et auxquels les dispositifs de réception (16) peuvent fournir des unités d'articles conformément à une commande de client, dans lequel des commandes de clients sont attribuées aux postes cibles (54), dans lequel la station de remplissage (10; 10') présente une multiplicité de colonnes de remplissage (12) dont chacune comporte, à son extrémité inférieure, un mécanisme d'ouverture (18), afin de pouvoir fournir automatiquement des unités d'articles préparées dans la colonne de remplissage (12) aux dispositifs de réception (16) qui défilent, de préférence de façon constante.

2. Système selon la revendication 1, dans lequel l'extrémité inférieure de la colonne de remplissage (12) est disposée au-dessus des dispositifs de réception (16), de façon à pouvoir recevoir les unités d'articles lors du défilement, lorsque le mécanisme d'ouverture (18) est actionné.

3. Système selon la revendication 1 ou 2, dans lequel les colonnes de remplissage (12) sont munies d'écrans d'affichage optiques (30), afin d'indiquer à un opérateur (26) dans laquelle des colonnes de remplissage (12) des unités d'articles, et de préférence lesquelles, doivent être préparées.

4. Système selon l'une quelconque des revendications précédentes, dans lequel chaque colonne de remplissage (12) présente une unité de détection (32), en particulier une barrière lumineuse ou une grille lumineuse, pour détecter une préparation d'une unité d'article dans la colonne de remplissage (12).

5. Système selon l'une quelconque des revendications précédentes, dans lequel il est prévu un calculateur de flux de matières (98), qui émet et transmet des signaux afin de fournir des unités d'articles préparées dans des colonnes de remplissage (12) dans des dispositifs de réception libres (16) et pour conduire ensuite à des postes cibles prédéterminés (54) les unités d'articles dans les dispositifs de réception (16).

6. Système selon l'une quelconque des revendications précédentes, dans lequel il est en outre prévu une installation de transport de récipients de dépôt (20), qui couple chaque station de remplissage (10; 10') à un stock de récipients (60; 80), afin de fournir des récipients de dépôt (22) avec des unités d'articles prédéterminées à la station de remplissage (10; 10') et de ranger éventuellement le récipient de dépôt (22) dans le stock de récipients (60; 80) après avoir effectué le prélèvement et la préparation dans les colonnes de remplissage (12).

7. Système selon la revendication 5 et 6, dans lequel le calculateur de flux de matières (98) est adapté pour commander des livraisons de récipients de dépôt prédéterminés (22) à des stations de remplissage prédéterminées (10; 10') à des instants donnés ou dans un ordre donné.

8. Système selon les revendications 5 à 7, dans lequel chaque station de remplissage (10; 10') comprend une unité de confirmation (31), afin de pouvoir afficher au calculateur de flux de matières (98) qu'un prélèvement d'article hors d'un récipient de dépôt (22) est terminé.

9. Système selon l'une quelconque des revendications 5 à 8, dans lequel un dispositif d'affichage (28) est associé à chaque station de remplissage (10; 10'), afin d'afficher un nombre d'unités d'articles à prélever dans des récipients de dépôt (22).

10. Système selon l'une quelconque des revendications précédentes, dans lequel les colonnes de remplissage (12) sont intégrées dans une enceinte (42), afin d'empêcher que des opérateurs (26) puissent voir les dispositifs de réception (16) défilant sous les colonnes de remplissage (12).

11. Système selon l'une quelconque des revendications précédentes, dans lequel les dispositifs de réception (16) sont dimensionnés de telle manière qu'ils puissent contenir des petites pièces.

12. Système selon l'une quelconque des revendications précédentes, dans lequel les dispositifs de réception (16) sont des coques, qui sont disposées sur les moyens de transport de préférence en deux rangées juxtaposées dans la direction longitudinale des moyens de transport.

13. Système selon l'une quelconque des revendications précédentes, dans lequel les moyens de transport sont entraînés en permanence avec une vitesse supérieure à 1 m/s.

14. Installation de préparation de commandes (100) avec un système de tri et de distribution (50) selon l'une quelconque des revendications 1 à 13, avec une entrée de marchandises (70), un magasin logistique (80), de préférence un système de stockage (60) pour le système de tri et de distribution (50), et une sortie de marchandises (90).
